# FASCICULE DE BREVET EUROPEEN

(11) **EP 3 761 425 B1**
(45) Date de publication et mention de la délivrance du brevet: **10.11.2021**
(21) Numéro de dépôt: 20183351.4
(22) Date de dépôt: 01.07.2020
(51) Int. Cl.: H01M 8/2484, H01M 8/04089, H01M 8/2432

(54) **CULASSE DE DISTRIBUTION FLUIDIQUE DE PILE A COMBUSTIBLE**
ZYLINDERKOPF ZUR FLUIDVERTEILUNG EINER BRENNSTOFFZELLE
CYLINDER HEAD FOR FLUID DISTRIBUTION OF A FUEL CELL

(30) Priorité: 03.07.2019 FR 1907379
(43) Date de publication de la demande: 06.01.2021
(73) Titulaire: Commissariat à l'Energie Atomique et aux Energies Alternatives, 75015 Paris (FR)
(72) Inventeur: DESMOULINS, Cyrille, 38054 GRENOBLE Cedex 9 (FR); MANICARDI, Philippe, 38054 GRENOBLE Cedex 9 (FR); POIROT-CROUVEZIER, Jean-Philippe, 38054 GRENOBLE Cedex 9 (FR); SAUZEDDE, François, 38054 GRENOBLE Cedex 9 (FR)
(74) Mandataire: INNOV-GROUP

(56) Documents cités:
- WO-A2-2010/092133
- US-A1- 2016 118 675
- US-B1- 6 541 148

## Description

### DOMAINE TECHNIQUE

Le domaine de l'invention est celui des piles à combustible, et plus précisément celui des culasses de distribution fluidique, adaptées à assurer l'alimentation et l'évacuation de fluides vis-à-vis d'un empilement de cellules électrochimiques de la pile à combustible. La culasse de distribution fluidique s'applique en particulier aux piles à combustible fonctionnant en mode ouvert avec recirculation d'hydrogène.

### ÉTAT DE LA TECHNIQUE ANTÉRIEURE

Une pile à combustible comporte généralement un empilement de cellules électrochimiques, comprenant chacune une anode et une cathode séparées électriquement l'une de l'autre par un électrolyte, dans lesquelles a lieu une réaction électrochimique entre deux réactifs qui sont introduits de manière continue. Dans le cas d'une pile à hydrogène, le combustible (l'hydrogène) est apporté au contact de l'anode, alors que le comburant (l'oxygène), par exemple contenu dans de l'air, est amené au contact de la cathode. La réaction électrochimique est subdivisée en deux demi-réactions, une oxydation et une réduction, qui ont lieu respectivement à l'interface anode/électrolyte et à l'interface cathode/électrolyte. Elle requiert la présence d'un conducteur ionique entre les deux électrodes, à savoir l'électrolyte, et un conducteur électronique formé par le circuit électrique externe. L'empilement de cellules est le lieu de la réaction électrochimique : les réactifs doivent y être apportés, les produits et les espèces non réactives doivent en être évacués, tout comme la chaleur produite.

L'empilement de cellules électrochimiques comporte des collecteurs d'entrée et des collecteurs de sortie, permettant d'assurer l'alimentation et la collecte fluidique vis-à-vis des cellules électrochimiques. Ainsi, les collecteurs d'entrée sont formés d'un orifice d'entrée et d'un conduit interne permettant d'alimenter les cellules électrochimiques en fluides entrants, et les collecteurs de sortie sont formés également d'un conduit interne et d'un orifice de sortie. Dans le cas de la recirculation sur un même fluide, le conduit interne peut comporter une boucle fluidique permettant de relier entre eux l'orifice d'entrée et l'orifice de sortie.

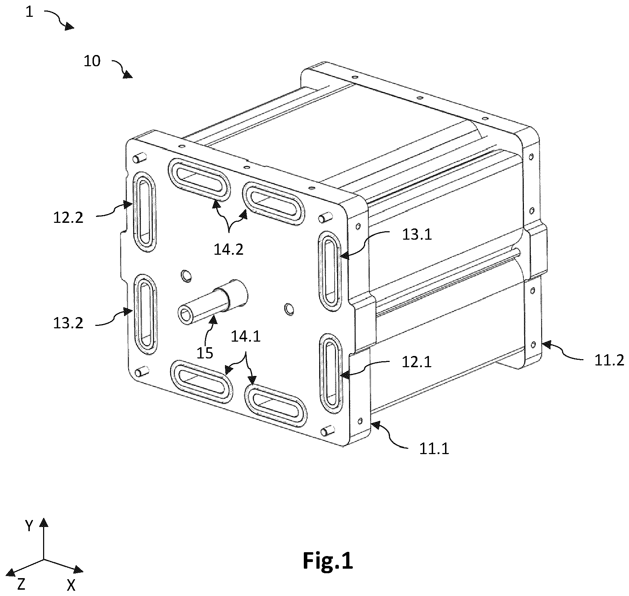

La figure 1 est une vue en perspective d'un exemple d'empilement 10 de cellules électrochimiques d'une pile à hydrogène 1. L'empilement 10 de cellules électrochimiques est ici délimité suivant l'axe Z par deux plaques terminales 11.1, 11.2 qui appliquent une force de serrage à l'empilement 10 via des éléments de serrage tels que des boulons tirants (non représentés), cet effort permettant d'obtenir une étanchéité adéquate en bordure des cellules électrochimiques d'une part, et un contact électrique suffisant entre les cellules d'autre part. Dans cet exemple, les collecteurs d'entrée 12.1, 13.1, 14.1 et de sortie 12.2, 13.2, 14.2 des différents fluides, à savoir du gaz comburant (oxygène), du gaz carburant (hydrogène), et ici du fluide caloporteur (par exemple de l'eau), débouchent sur une même face dite de connexion fluidique de la plaque terminale 11.1.

Comme le décrit le brevet US6541148B1, une pile à combustible peut comporter une culasse de distribution fluidique assurant le raccord fluidique entre les collecteurs d'entrée et de sortie de l'empilement de cellules électrochimiques vis-à-vis des différents conduits externes d'alimentation et d'évacuation des fluides. Elle peut également assurer le maintien mécanique de l'empilement de cellules électrochimiques. Par ailleurs, différents capteurs peuvent être assemblés à la culasse pour permettre, par exemple, une mesure fluidique, thermique ou électrique. La culasse est assemblée de manière étanche à la face de connexion fluidique de la plaque terminale.

Dans cet exemple, la culasse de distribution fluidique est formée d'une structure mécanique rigide dans laquelle est formée une pluralité de chambres fluidiques. Chaque chambre fluidique assure la communication fluidique entre un conduit externe d'alimentation ou d'évacuation d'une part et un collecteur d'entrée ou de sortie d'autre part, tout en étant hermétique vis-à-vis de l'environnement extérieur de la culasse (i.e. vis-à-vis de l'environnement extérieur de la pile à combustible). Ainsi, à titre d'exemple, un conduit d'alimentation en hydrogène est raccordé à un port d'entrée d'une chambre fluidique communiquant avec le collecteur d'entrée d'hydrogène.

Par ailleurs, une pile à combustible peut fonctionner en mode ouvert avec recirculation de l'hydrogène. Ainsi, lorsqu'on alimente la pile à combustible en surstoechiométrie d'hydrogène (rapport supérieur à 1 entre la quantité d'hydrogène injecté et la quantité d'hydrogène consommé), l'hydrogène sortant présente un débit suffisant pour évacuer l'eau produite par la réaction, qui peut ensuite être collectée à l'aide d'un séparateur de phase. Pour éviter de perdre l'hydrogène non consommé, une boucle de recirculation peut être intégrée pour réinjecter une partie de l'hydrogène non consommé en entrée de pile. La part restante d'hydrogène appauvrie est évacuée du circuit par le collecteur de sortie. Ce fonctionnement en mode ouvert se distingue ainsi d'un fonctionnement en mode bouché (*dead-end,* en anglais) où la sortie de l'anode est obturée (pas de boucle de recirculation interne).

Comme le décrit notamment la demande de brevet EP3331079A1, une ligne fluidique d'alimentation en hydrogène relie une source d'hydrogène au collecteur d'entrée anodique. La boucle de recirculation comporte un éjecteur disposé sur la ligne d'alimentation entre la source d'hydrogène et le collecteur d'entrée anodique, et une ligne fluidique de recirculation qui relie le collecteur de sortie anodique à une entrée secondaire de l'éjecteur. La boucle de recirculation permet de réinjecter dans le collecteur d'entrée le gaz issu du collecteur de sortie, c'est-à-dire l'hydrogène non consommé et éventuellement des gaz non réactifs.

Il existe cependant un besoin de disposer d'une culasse de distribution fluidique de pile à combustible fonctionnant en mode ouvert avec une boucle de recirculation d'hydrogène, permettant d'améliorer la sécurité en cas de fuite éventuelle d'hydrogène.

### EXPOSÉ DE L'INVENTION

L'invention a pour objectif de remédier au moins en partie aux inconvénients de l'art antérieur, et plus particulièrement de proposer une culasse de distribution fluidique de pile à combustible, permettant d'améliorer la sécurité associée à la recirculation de l'hydrogène.

Pour cela, l'objet de l'invention est une culasse de distribution fluidique de pile à combustible selon la revendication 1. La pile à combustible est destinée à fonctionner en mode ouvert avec recirculation d'hydrogène, et comporte :
∘ au moins un empilement de cellules électrochimiques, comprenant des collecteurs d'entrée et des collecteurs de sortie, lesquels débouchent sur une même face de connexion fluidique de l'empilement et sont adaptés à assurer l'écoulement de fluides dans l'empilement, dont un collecteur d'entrée d'hydrogène et un collecteur de sortie d'hydrogène, et
∘ au moins une ligne fluidique d'alimentation en hydrogène destinée à être reliée au collecteur d'entrée d'hydrogène.

Par ailleurs, la culasse comporte :
o des chambres fluidiques, dont une chambre fluidique d'entrée d'hydrogène et une chambre fluidique de sortie d'hydrogène, destinées à communiquer avec les collecteurs d'entrée et de sortie, et étant hermétiques vis-à-vis de l'environnement extérieur de la culasse lorsque celle-ci est assemblée à l'empilement, et délimitées transversalement, suivant un plan principal de la culasse, par au moins une paroi transversale.

Selon l'invention, la culasse comporte en outre :
o une chambre centrale, entourée, dans le plan principal, par les chambres fluidiques, et comportant au moins deux ouvertures de ventilation autorisant une communication fluidique, dans le plan principal, entre la chambre centrale et l'environnement extérieur de la culasse ;
o un éjecteur, situé dans la chambre centrale, raccordé à la chambre fluidique d'entrée d'hydrogène et destiné à être raccordé à la ligne fluidique d'alimentation en hydrogène ;
o une ligne fluidique de recirculation d'hydrogène, située dans la chambre centrale, raccordée à la chambre fluidique de sortie d'hydrogène et à l'éjecteur.

Certains aspects préférés, mais non limitatifs de cette culasse de distribution fluidique sont les suivants.

Les deux ouvertures de ventilation peuvent être disposées de manière opposée l'une à l'autre suivant un axe principal orthogonal au plan principal de la culasse, autour duquel les chambres fluidiques sont agencées.

La chambre fluidique d'entrée d'hydrogène et la chambre fluidique de sortie d'hydrogène peuvent comporter, respectivement, un port d'entrée d'hydrogène et un port de sortie d'hydrogène, lesquels sont situés dans la chambre centrale et orientés dans le plan principal de la culasse.

La ligne fluidique d'alimentation en hydrogène peut s'étendre dans la chambre centrale en passant par l'une des ouvertures de ventilation.

La culasse peut comporter des chambres fluidiques d'oxygène, et des chambres fluidiques de fluide caloporteur, comportant chacune un port d'entrée et de sortie, lesquels sont raccordés à un côté des chambres fluidiques correspondantes opposé à la chambre centrale.

La culasse peut comporter deux plaques rigides opposées entre lesquelles s'étend au moins la paroi transversale les ouvertures de ventilation s'étendant sur toute la distance séparant lesdites plaques rigides.

La culasse peut comporter au moins deux parois transversales distinctes délimitant transversalement lesdites chambres fluidiques.

La culasse peut comporter au moins deux parois transversales distinctes délimitant transversalement lesdites chambres fluidiques, les parois transversales étant localement distantes l'une de l'autre de manière à former lesdites ouvertures de ventilation autorisant ainsi une convection naturelle de l'air entre la chambre centrale et l'environnement extérieur de la culasse.

La culasse peut comporter une chambre fluidique de sortie d'air, destinée à communiquer à un collecteur de sortie d'air de l'empilement, séparée de la chambre centrale par une paroi transversale comportant un orifice d'injection d'air débouchant dans la chambre centrale.

L'invention porte également sur une pile à combustible, destinée à fonctionner en mode ouvert avec recirculation d'hydrogène, et comportant :
o au moins un empilement de cellules électrochimiques comprenant des collecteurs d'entrée et des collecteurs de sortie, lesquels débouchent sur une même face de connexion fluidique de l'empilement et sont adaptés à assurer l'écoulement de fluides dans l'empilement, dont un collecteur d'entrée d'hydrogène et un collecteur de sortie d'hydrogène, et
o au moins une ligne fluidique d'alimentation en hydrogène destinée à être reliée au collecteur d'entrée d'hydrogène, et
o une culasse de distribution fluidique selon l'une quelconque des caractéristiques précédentes, assemblée de manière étanche à l'empilement de sorte que les chambres fluidiques communiquent avec les collecteurs d'entrée et de sortie.

La pile à combustible peut comporter deux empilements de cellules électrochimiques différents, et une culasse de distribution fluidique disposée entre les deux empilements, et assemblée de manière étanche auxdits empilements de sorte que les chambres fluidiques communiquent avec les collecteurs d'entrée et de sortie desdits empilements.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1, déjà décrite, est une vue schématique en perspective d'un empilement de cellules électrochimiques selon un exemple de l'art antérieur ;
les figures 2A et 2B sont des vues schématiques et partielles, en vue de face (fig.2A) et en perspective (fig.2B) d'une culasse de distribution fluidique selon un premier mode de réalisation ;
la figure 3 est une vue schématique en perspective d'une culasse de distribution fluidique selon un autre mode de réalisation dans lequel elle est assemblée à deux empilements de cellules électrochimiques et disposée entre ceux-ci.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près.

L'invention porte sur une culasse de distribution fluidique de pile à combustible. La pile à combustible fonctionne en mode ouvert avec recirculation d'hydrogène. Autrement dit, les cathodes des cellules électrochimiques de la pile à combustible sont alimentées en oxygène (oxygène pur ou air), et les anodes sont alimentées en hydrogène. La pile à combustible comporte une boucle de recirculation d'hydrogène, formée d'un éjecteur raccordé à une ligne d'alimentation en hydrogène et au collecteur d'entrée anodique, et une ligne de recirculation d'hydrogène reliant le collecteur de sortie anodique à une entrée secondaire de l'éjecteur.

L'empilement de cellules électrochimiques est ici identique ou similaire à celui décrit précédemment en référence à la fig. 1, et n'est pas décrit à nouveau en détail. Les collecteurs d'entrée et de sortie d'oxygène, d'hydrogène, et avantageusement ceux du fluide caloporteur (ici de l'eau) débouchent sur une même face de connexion fluidique de l'une des plaques terminales.

Comme décrit par la suite, la culasse de distribution fluidique peut être une culasse terminale assemblée à un seul empilement de cellules électrochimiques, ou une culasse intercalaire disposée entre deux empilements de cellules électrochimiques et alimentant ces deux empilements (ou plus) de manière simultanée.

On définit ici et pour la suite de la description un repère direct tridimensionnel orthogonal (X,Y,Z), où les axes X et Y forment un plan parallèle au plan principal des cellules électrochimiques, et où l'axe Z est orienté de manière sensiblement orthogonale au plan principal des cellules électrochimiques. Le plan principal des cellules électrochimiques est parallèle au plan principal de la culasse de distribution fluidique.

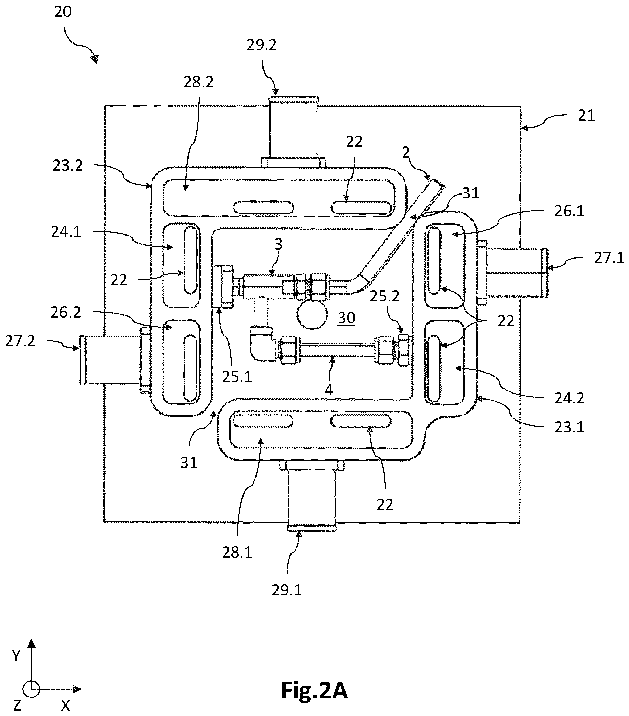

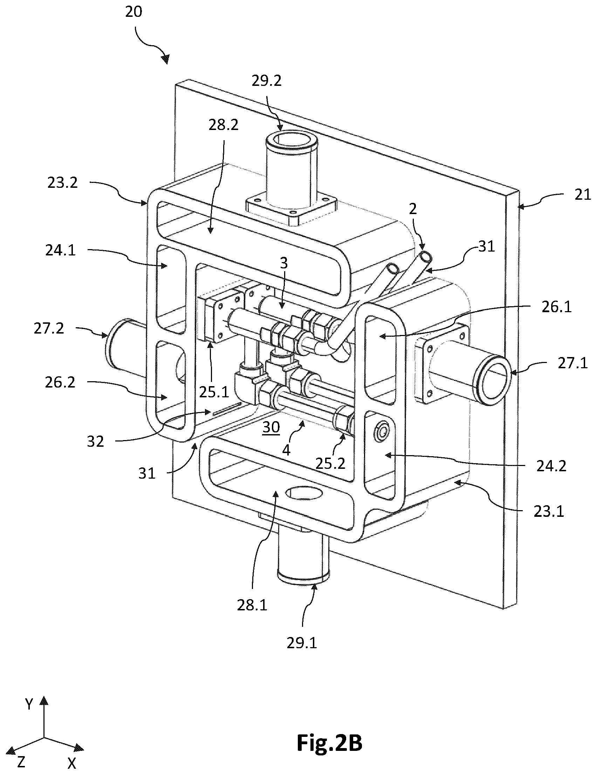

Les figures 2A et 2B sont des vues schématiques et partielles, respectivement de face suivant l'axe Z et en perspective, d'une culasse 20 de distribution fluidique selon un mode de réalisation. Dans cet exemple, la culasse 20 est une culasse terminale et non pas intercalaire. Elle est donc destinée à assurer la distribution fluidique d'un seul empilement 10 de cellules électrochimiques, et à être assemblée à l'empilement 10 au niveau de la face de connexion fluidique de ce dernier.

La culasse 20 est destinée à alimenter l'empilement 10 de cellules électrochimiques en fluides carburant et comburant, et plus précisément en hydrogène et en oxygène (éventuellement contenu dans de l'air), et à collecter les fluides n'ayant pas réagi. Elle permet également la recirculation d'hydrogène dans l'empilement 10. Dans cet exemple, elle assure également l'injection et la collecte du fluide caloporteur. La culasse 20 peut également présenter une fonction mécanique de maintien de l'empilement 10 de cellules électrochimiques vis-à-vis du reste de la pile à combustible. D'autres éléments peuvent également être fixés à la culasse 20, tels que des capteurs de mesure fluidique, électrique ou thermique.

La culasse 20 est une structure mécanique rigide comportant une pluralité de chambres fluidiques 24, 26, 28 qui communiquent chacune avec un collecteur d'entrée ou de sortie 12, 13, 14. Comme détaillé plus loin, elle comporte également une chambre dite centrale 30, entourée par les chambres fluidiques 24, 26, 28 tout en étant en communication fluidique avec l'environnement extérieur de la culasse 20, et comportant la boucle de recirculation d'hydrogène. Les chambres fluidiques 24, 26, 28 et la chambre centrale 30 sont chacune délimitées transversalement par au moins une plaque transversale 23 qui s'étend dans un plan principal XY de la culasse 20, et suivant l'axe Z entre deux faces principales opposées de la culasse 20. Par environnement extérieur de la culasse 20, on entend également l'environnement extérieur de la pile à combustible.

La culasse 20 comporte au moins une plaque rigide à laquelle sont fixées de manière étanche la ou les parois transversales 23, et qui participe à délimiter les chambres fluidiques 24, 26, 28 et la chambre centrale 30 suivant l'axe Z. Dans ce mode de réalisation, la culasse 20 comporte deux plaques rigides : une plaque d'assemblage 21 et une plaque de fond (non représentée), qui forment les deux faces principales opposées de la culasse 20. Dans cet exemple, les deux plaques sont parallèles entre elles.

Sur les figures 2A et 2B, par souci de clarté, la plaque de fond n'est pas représentée afin de pouvoir représenter l'intérieur de la culasse 20. La plaque de fond s'étend ici de manière parallèle au plan principal XY de la culasse 20 et forme ainsi une première face principale de la culasse 20. Elle est fixée de manière étanche aux parois transversales 23.1, 23.2, et délimite les chambres fluidiques 24, 26, 28 et la chambre centrale 30 suivant la direction +Z. Elle forme ainsi une paroi de fond pour chacune des chambres. La plaque de fond est réalisée en un matériau rigide, et ainsi participe à former la structure rigide de la culasse 20.

La plaque d'assemblage 21 est destinée à venir au contact de la face de connexion de la plaque terminale 11.1 de l'empilement 10 lorsque la culasse 20 est assemblée à ce dernier. Elle s'étend ici de manière parallèle au plan principal XY de la culasse 20 et forme ainsi une deuxième face principale de la culasse 20. Elle est fixée de manière étanche aux parois transversales 23.1, 23.2, et délimite les chambres fluidiques 24, 26, 28 et la chambre centrale 30 suivant la direction +Z. La plaque d'assemblage 21 est réalisée en un matériau rigide, et ainsi participe à former la structure rigide de la culasse 20.

La plaque d'assemblage 21 comporte des orifices 22 disposés de manière à permettre la communication fluidique entre les chambres fluidiques 24, 26, 28 et les collecteurs d'entrée ou de sortie 12, 13, 14. Lorsque la culasse 20 est assemblée à l'empilement 10, la plaque d'assemblage 21 est assemblée de manière hermétique à la plaque terminale vis-à-vis de l'environnement extérieur. Ainsi, les fluides peuvent circuler entre les chambres fluidiques 24, 26, 28 et les collecteurs d'entrée ou de sortie 12, 13, 14 sans qu'il y ait de fuites vers l'extérieur. Un joint étanche peut être disposé entre la plaque d'assemblage 21 et la face de connexion fluidique de l'empilement 10.

La plaque d'assemblage 21 est parallèle au plan principal XY de la culasse 20, et donc parallèle au plan principal des cellules électrochimiques. Dans ce mode de réalisation, la plaque de fond est parallèle à la plaque d'assemblage 21 et donc au plan principal XY de la culasse 20. Aussi, les parois transversales des chambres fluidiques 24, 26, 28 présentent ici une hauteur, suivant l'axe Z, sensiblement constante.

La culasse 20 comporte une pluralité de chambres fluidiques 24, 26, 28 adaptées à alimenter l'empilement 10 de cellules électrochimiques en fluides entrants, et à collecter les fluides sortants. Ces chambres fluidiques 24, 26, 28 entourent et délimitent, dans le plan principal XY, une chambre centrale 30 logeant la boucle de recirculation d'hydrogène.

Chaque chambre fluidique 24, 26, 28 communique avec au moins un collecteur d'entrée 12.1, 13.1, 14.1 ou de sortie 12.2, 13.2, 14.2. Lorsque la culasse 20 est assemblée à l'empilement 10, les chambres fluidiques 24, 26, 28 sont hermétiques à l'environnement extérieur de la culasse 20. Autrement dit, les fluides présents dans les chambres fluidiques 24, 26, 28 peuvent circuler vers ou depuis les collecteurs d'entrée ou de sortie 12, 13, 14, mais ne peuvent s'échapper dans l'environnement extérieur de la culasse 20 et donc de la pile à combustible.

Chaque chambre fluidique 24, 26, 28 est délimitée transversalement, c'est-à-dire dans le plan principal XY de la culasse 20, par au moins une plaque transversale 23 qui s'étend entre les deux faces principales de la culasse 20. Les chambres fluidiques 24, 26, 28 sont délimitées suivant la direction +Z par la plaque de fond (non représentée) qui forme une paroi de fond pour chacune des chambres fluidiques 24, 26, 28. Elles sont délimitées ici suivant la direction -Z par la plaque d'assemblage 21 qui comporte les orifices 22.

Chaque chambre fluidique 24, 26, 28 comporte au moins un port d'entrée ou de sortie 25, 27, 29, permettant le raccordement fluidique entre un conduit d'alimentation ou d'évacuation (seules les lignes, ou conduits, d'alimentation 2 et de recirculation 4 en hydrogène sont représentées) et la chambre fluidique. Dans cet exemple, les ports d'entrée 25.1, 27.1, 29.1 et les ports de sortie 25.2, 27.2, 29.2 sont assemblés de manière étanche à la plaque transversale 23 des chambres fluidiques 24, 26, 28, et sont donc orientés dans le plan principal XY. En variante, les ports d'entrée de sortie 25, 27, 29 peuvent être assemblés de manière étanche à la paroi de fond (non représentée) des chambres fluidiques 24, 26, 28, et donc être orientés suivant l'axe Z, en particulier lorsque la culasse 20 est une culasse terminale et non pas intercalaire. Quoi qu'il en soit, comme détaillé par la suite, les ports d'entrée et de sortie d'hydrogène 25.1, 25.2 sont orientés dans le plan principal XY, que la culasse 20 soit une culasse terminale ou une culasse intercalaire.

Aussi, la culasse 20 comporte une chambre fluidique d'entrée d'hydrogène 24.1 et une chambre fluidique de sortie d'hydrogène 24.2, qui communiquent respectivement avec un collecteur d'entrée d'hydrogène 12.1 et un collecteur de sortie d'hydrogène 12.2 par l'intermédiaire des orifices 22 correspondants formés dans la plaque d'assemblage 21. Ces chambres fluidiques 24.1, 24.2 sont respectivement munies d'un port d'entrée 25.1 et d'un port de sortie 25.2.

Dans ce mode de réalisation, la culasse 20 comporte une chambre fluidique d'entrée d'air 26.1 et une chambre fluidique de sortie d'air 26.2, qui communiquent respectivement avec un collecteur d'entrée d'air 13.1 et un collecteur de sortie d'air 13.2. Ces chambres fluidiques 26.1, 26.2 sont respectivement munies d'un port d'entrée 27.1 et d'un port de sortie 27.2. De plus, la culasse 20 comporte une chambre fluidique d'entrée d'eau (fluide caloporteur) 28.1 et une chambre fluidique de sortie d'eau 28.2, qui communiquent respectivement avec un ou des collecteurs d'entrée d'eau 14.1 et un ou des collecteurs de sortie d'eau 14.2. Ces chambres fluidiques 28.1, 28.2 sont respectivement munies d'un port d'entrée 29.1 et d'un port de sortie 29.2.

Dans cet exemple, une première paroi transversale 23.1 délimite continûment certaines chambres fluidiques d'eau, d'air et d'hydrogène, ici la chambre d'entrée d'air 26.1, la chambre de sortie d'hydrogène 24.2, et la chambre d'entrée d'eau 28.1, tandis qu'une deuxième paroi transversale 23.2, distincte de la première paroi transversale 23.1, délimite continûment les autres chambres fluidiques d'eau, d'air et d'hydrogène, à savoir ici la chambre de sortie d'air 26.2, la chambre d'entrée d'hydrogène 24.1, et la chambre de sortie d'eau 28.2. D'autres agencements ou délimitations des chambres par les parois transversales 23.1, 23.2 sont bien entendu possibles. En variante, une même paroi transversale 23 peut délimiter continûment toutes les chambres fluidiques 24, 26, 28, et ainsi entourer la chambre centrale 30 (tout en ayant au moins les deux ouvertures de ventilation décrites plus loin). En variante encore, la culasse 20 peut comporter un nombre de parois transversales supérieur à deux.

La culasse 20 comporte en outre une chambre dite centrale 30, entourée dans le plan principal XY par les chambres fluidiques 24, 26, 28, dans laquelle se situe la boucle de recirculation d'hydrogène. Elle est entourée partiellement par les chambres fluidiques 24, 26, 28 dans la mesure où elle comporte au moins deux ouvertures de ventilation 31, orientée dans le plan principal XY, autorisant une communication fluidique entre la chambre centrale 30 et l'environnement extérieur de la culasse 20, i.e. l'environnement extérieur de la pile à combustible.

Dans ce mode de réalisation, la chambre centrale 30 est délimitée dans le plan principal XY par les première et deuxième parois transversales 23.1, 23.2. De plus, elle est délimitée suivant la direction +Z par la plaque de fond, et est délimitée suivant la direction -Z par la plaque d'assemblage 21. Ici, ni la plaque d'assemblage 21 ni la plaque de fond ne comportent d'orifices débouchant dans la chambre centrale 30. En variante, en particulier dans le cas d'une culasse 20 terminale, la plaque de fond peut comporter au moins un orifice de ventilation contribuant à assurer la communication fluidique entre la chambre centrale 30 et l'environnement extérieur de la culasse 20.

La boucle de recirculation d'hydrogène est située dans la chambre centrale 30. Plus précisément, elle comporte un éjecteur 3 et une ligne fluidique de recirculation d'hydrogène 4, qui, tous deux, sont situés dans la chambre centrale 30.

L'éjecteur 3 est raccordé au port d'entrée 25.1 de la chambre d'entrée d'hydrogène 24.1. La ligne fluidique de recirculation 4 est raccordée d'une part au port de sortie 25.2 de la chambre de sortie d'hydrogène 24.2, et à l'éjecteur 3 d'autre part. Aussi, les ports d'entrée 25.1 et de sortie 25.2 sont orientés dans le plan principal XY et sont situés dans la chambre centrale 30. Dans le cas du montage avec deux empilements 10 de cellules électrochimiques, le montage peut être réalisé avec deux boucles de recirculation d'hydrogène en parallèle.

En revanche, les autres ports d'entrée et de sortie 27, 29, à savoir ceux relatifs à l'air et à l'eau, ne sont pas situés dans la chambre centrale 30. Autrement dit, ils sont raccordés à une paroi transversale 23 du côté opposé à la chambre centrale 30. En variante, comme mentionné précédemment, ils peuvent être raccordés à la plaque de fond de la culasse 20 (donc orientés suivant l'axe Z), en particulier lorsque la culasse 20 est une culasse terminale et non pas une culasse intercalaire.

La ligne fluidique d'alimentation 2 en hydrogène est reliée à la chambre fluidique d'entrée 24.1 par l'intermédiaire de l'éjecteur 3. Elle est donc raccordée à ce dernier. Dans cet exemple, la ligne fluidique d'alimentation 2 s'étend dans la chambre centrale 30 dans le plan principal XY et traverse l'une des ouvertures de ventilation 31. Cet agencement est particulièrement avantageux lorsque la culasse 20 est une culasse intercalaire, ou lorsqu'elle est une culasse terminale qui doit présenter une dimension réduite suivant l'axe Z. En variante, en particulier lorsque la culasse 20 est terminale, la ligne fluidique d'alimentation 2 peut ne pas traverser une ouverture de ventilation 31, mais peut être introduite dans la chambre centrale 30 en traversant la plaque de fond (par exemple orientée suivant l'axe Z).

Dans cet exemple, les chambres fluidiques d'entrée 28.1 et de sortie 28.2 en eau sont opposées l'une à l'autre vis-à-vis de l'axe principal de la culasse 20. Cet axe principal passe ici par le centre de la chambre centrale 30, et peut être coaxial avec une tige centrale 15 électriquement conductrice reliée à l'empilement 10 suivant l'axe Z (cf. fig.1). Le centre de la chambre centrale 30 peut être une position équidistante à au moins deux parois transversales opposées. De même, les chambres d'entrée 26.1 et de sortie 26.2 d'air sont ici opposées l'une à l'autre vis-à-vis de l'axe principal de la culasse 20. La chambre d'entrée 24.1 d'hydrogène est ici située entre la chambre de sortie d'air 26.2 et la chambre de sortie d'eau 28.2. La chambre de sortie d'hydrogène 24.2 est ici située entre la chambre d'entrée d'air 26.1 et la chambre d'entrée d'eau 28.1. Une première ouverture de ventilation 31 est située entre la chambre d'entrée d'eau 28.1 et la chambre de sortie d'air 26.2, et une deuxième ouverture de ventilation 31 est située entre la chambre d'entrée d'air 26.1 et la chambre de sortie d'eau 28.2.

Dans la mesure où la boucle de recirculation d'hydrogène est située dans la chambre centrale 30, laquelle est en communication fluidique avec l'extérieur par le biais des ouvertures de ventilation 31, on diminue ainsi les risques d'accumulation d'hydrogène dans la chambre centrale 30 en cas de fuite localisée d'hydrogène. En effet, la ventilation naturelle de la chambre centrale 30 permet un renouvellement continu de l'air présent dans ce volume. Ce renouvellement réduit le risque de formation d'un mélange d'air et d'hydrogène, améliorant ainsi la sécurité. En effet, le mélange d'air et d'hydrogène peut, dans certaines proportions, être inflammable ou détonnant.

Afin d'assembler l'éjecteur dans la chambre centrale 30, il est préférable d'utiliser des raccords démontables pour réaliser les liaisons fluidiques. Les liaisons démontables de type raccords à visser possèdent intrinsèquement un risque de fuite. Le fait d'implanter ces composants dans un volume avec un renouvellement d'air naturel contribue à maintenir un niveau de sécurité élevé vis-à-vis de l'éventuelle formation d'un mélange d'air et d'hydrogène.

Il est aussi possible d'utiliser des raccords fluidiques dont les normes de sécurité sont moins contraignantes, et donc des raccords fluidiques moins coûteux, en particulier en ce qui concerne le raccordement de la ligne fluidique de recirculation 4 au port de sortie 25.2 et à l'éjecteur 3, le raccordement de l'éjecteur 3 au port d'entrée 25.1, et le raccordement de la ligne fluidique d'alimentation 2 à l'éjecteur 3. La culasse 20 présente ainsi un coût de réalisation diminué tout en maintenant élevé le niveau de sécurité vis-à-vis des risques de formation d'un mélange d'air et d'hydrogène en cas de fuites localisées d'hydrogène dans la boucle de recirculation.

De plus, on obtient un système pile à combustible dont les dimensions sont réduites, dans la mesure où la boucle de recirculation est située dans la culasse 20 de distribution fluidique, et non pas à l'extérieure de celle-ci.

De préférence, les ouvertures de ventilation 31 sont disposées de manière opposée l'une à l'autre suivant l'axe principal de la culasse 20, autour duquel les chambres fluidiques 24, 26, 28 sont agencées. Ainsi, on réduit encore les risques qu'une poche d'hydrogène ne se forme et demeure dans une zone de la chambre centrale 30 éloignée des ouvertures de ventilation 31. La sécurité de la culasse 20 en est renforcée vis-à-vis des risques de formation d'un mélange d'air et d'hydrogène.

De préférence, les ouvertures de ventilation 31 s'étendent suivant l'axe Z sur toute la hauteur des parois transversales 23.1, 23.2, ce qui contribue à améliorer la ventilation naturelle et à éviter l'accumulation d'hydrogène dans la chambre centrale 30. En variante, elles peuvent cependant ne s'étendre que sur une partie seulement de la hauteur des parois transversales 23.1, 23.2.

Les ouvertures de ventilation 31 présentent des dimensions telles que la résistance hydraulique est faible et permet une circulation fluidique naturelle entre la chambre centrale 30 et l'environnement extérieur. Par ailleurs, dans cet exemple, l'une des ouvertures de ventilation 31 présente une largeur dans le plan XY telle qu'elle est traversée par le conduit d'alimentation en hydrogène 2.

De préférence, comme l'illustre la fig.2B, la chambre fluidique de sortie d'oxygène appauvri 26.2 comporte au moins un orifice d'injection 32 permettant l'injection du fluide sortant (de préférence de l'air) dans la chambre centrale 30. Cet orifice d'injection 32 est situé dans la paroi transversale 23 qui délimite la chambre fluidique de sortie d'air 26.2 vis-à-vis de la chambre centrale 30. L'orifice d'injection 32 peut présenter des dimensions permettant d'obtenir un débit d'air prédéfini et relativement faible vis-à-vis du débit global sortant au niveau du collecteur de sortie 13.2. De plus, l'air sortant par le collecteur de sortie 13.2 est généralement humide. Aussi, on humidifie également l'air présent dans la chambre centrale 30, ce qui contribue à réduire les risques d'ignition dans la chambre centrale 30.

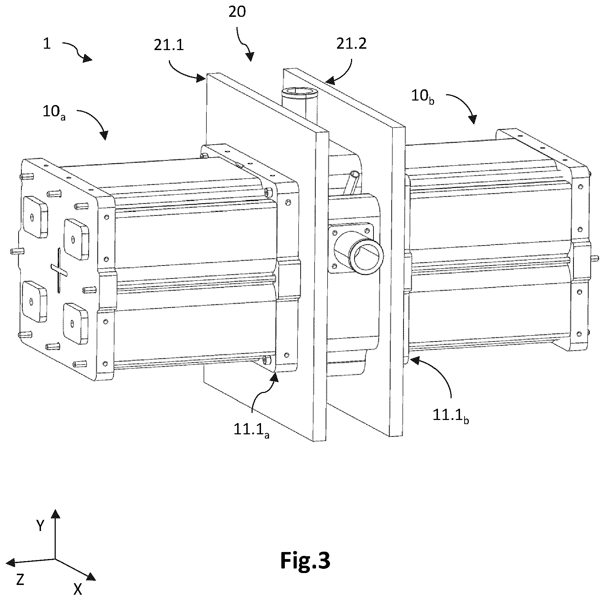

La figure 3 est une vue schématique en perspective d'une culasse 20 de distribution fluidique selon un autre mode de réalisation, dans lequel la culasse 20 est disposée entre et assemblée à deux empilements 10ₐ, 10_{b} de cellules électrochimiques différents, et assure la distribution fluidique à ces deux empilements 10ₐ, 10_{b} de manière simultanée.

La culasse 20 est alors dite intercalaire. Elle se distingue de la culasse terminale décrite précédemment essentiellement en ce qu'elle comporte deux plaques d'assemblage 21.1, 21.2, chacune comportant des orifices assurant la communication fluidique entre les chambres fluidiques 24, 26, 28 et les collecteurs d'entrée ou de sortie 12, 13, 14 de l'empilement correspondant. Chaque plaque d'assemblage 21.1, 21.2 est assemblée de manière étanche à la face de connexion fluidique de la plaque terminale 11.1ₐ, 11.1_{b} de l'empilement correspondant.

La culasse intercalaire 20 présente ainsi une dimension, suivant l'axe Z, particulièrement réduite, dans la mesure où les conduits d'alimentation et d'évacuation fluidique sont raccordés aux différents ports dans le plan principal XY de la culasse 20. La chambre centrale 30 comporte la boucle de recirculation, la ligne d'alimentation en hydrogène s'étend jusque dans la chambre centrale 30 par l'une des ouvertures de ventilation.

Des modes de réalisation particuliers viennent d'être décrits. Différentes variantes et modifications apparaîtront à l'homme du métier.

Ainsi, l'agencement des chambres fluidiques 24, 26, 28 les unes par rapport aux autres, ainsi que les dimensions des chambres fluidiques 24, 26, 28 et de la chambre centrale 30, peuvent être différents.

Comme l'illustre les figures, la boucle de recirculation peut comporter plusieurs éjecteurs et lignes de recirculation. Ainsi, deux lignes d'alimentation en hydrogène sont raccordées chacune à un éjecteur différent. De même, chaque chambre fluidique d'air et d'eau peut comporter un ou plusieurs ports d'entrée ou de sortie.

## Revendications

1. Culasse (20) de distribution fluidique de pile à combustible, la pile à combustible (1) étant destinée à fonctionner en mode ouvert avec recirculation d'hydrogène et comportant :
• au moins un empilement (10) de cellules électrochimiques, comprenant des collecteurs d'entrée (12.1, 13.1, 14.1) et des collecteurs de sortie (12.2, 13.2, 14.2), lesquels débouchent sur une même face de connexion fluidique de l'empilement (10) et sont adaptés à assurer l'écoulement de fluides dans l'empilement (10), dont un collecteur d'entrée d'hydrogène (12.1) et un collecteur de sortie d'hydrogène (12.2), et
• au moins une ligne fluidique d'alimentation en hydrogène (2) destinée à être reliée au collecteur d'entrée d'hydrogène (12.1),
o la culasse (20) comportant :
• des chambres fluidiques (24, 26, 28), dont une chambre fluidique d'entrée d'hydrogène (24.1) et une chambre fluidique de sortie d'hydrogène (24.2), destinées à communiquer avec les collecteurs d'entrée et de sortie (12, 13, 14), et étant hermétiques vis-à-vis de l'environnement extérieur de la culasse (20) lorsque celle-ci est assemblée à l'empilement (10), et délimitées transversalement, suivant un plan principal de la culasse (20), par au moins une paroi transversale (23) ;
o la culasse (20) étant **caractérisée en ce qu'**elle comporte en outre :
• une chambre centrale (30), entourée, dans le plan principal, par les chambres fluidiques (24, 26, 28), et comportant au moins deux ouvertures de ventilation (31) autorisant une communication fluidique, dans le plan principal, entre la chambre centrale (30) et l'environnement extérieur de la culasse (20) ;
• un éjecteur (3), situé dans la chambre centrale (30), raccordé à la chambre fluidique d'entrée d'hydrogène (24.1) et destiné à être raccordé à la ligne fluidique d'alimentation en hydrogène (2) ;
• une ligne fluidique de recirculation d'hydrogène (4), située dans la chambre centrale (30), raccordée à la chambre fluidique de sortie d'hydrogène (24.2) et à l'éjecteur (3).

2. Culasse (20) de distribution fluidique selon la revendication 1, dans laquelle les deux ouvertures de ventilation (31) sont disposées de manière opposée l'une à l'autre suivant un axe principal orthogonal au plan principal de la culasse (20), autour duquel les chambres fluidiques (24, 26, 28) sont agencées.

3. Culasse (20) de distribution fluidique selon la revendication 1 ou 2, dans laquelle la chambre fluidique d'entrée d'hydrogène (24.1) et la chambre fluidique de sortie d'hydrogène (24.2) comportent, respectivement, un port d'entrée d'hydrogène (25.1) et un port de sortie d'hydrogène (25.2), lesquels sont situés dans la chambre centrale (30) et orientés dans le plan principal de la culasse (20).

4. Culasse (20) de distribution fluidique selon l'une quelconque des revendications 1 à 3, dans laquelle la ligne fluidique d'alimentation en hydrogène (2) s'étend dans la chambre centrale (30) en passant par l'une des ouvertures de ventilation (31).

5. Culasse (20) de distribution fluidique selon l'une quelconque des revendications 1 à 4, comportant des chambres fluidiques d'oxygène (26.1, 26.2), et des chambres fluidiques de fluide caloporteur (28.1, 28.2), comportant chacune un port d'entrée (27.1, 29.1) et de sortie (27.2, 29.2), lesquels sont raccordés à un côté des chambres fluidiques (26.1, 26.2, 28.1, 28.2) correspondantes opposé à la chambre centrale (30).

6. Culasse (20) de distribution fluidique selon l'une quelconque des revendications 1 à 5, comportant deux plaques rigides opposées entre lesquelles s'étend au moins la paroi transversale (23), les ouvertures de ventilation (31) s'étendant sur toute la distance séparant lesdites plaques rigides.

7. Culasse (20) de distribution fluidique selon l'une quelconque des revendications 1 à 6, comportant au moins deux parois transversales (23.1, 23.2) distinctes délimitant transversalement lesdites chambres fluidiques (24, 26, 28).

8. Culasse (20) de distribution fluidique selon l'une quelconque des revendications 1 à 7, comportant au moins deux parois transversales (23.1, 23.2) distinctes délimitant transversalement lesdites chambres fluidiques (24, 26, 28), les parois transversales (23.1, 23.2) étant localement distantes l'une de l'autre de manière à former lesdites ouvertures de ventilation (31) autorisant ainsi une convection naturelle de l'air entre la chambre centrale (30) et l'environnement extérieur de la culasse (20).

9. Culasse (20) de distribution fluidique selon l'une quelconque des revendications 1 à 8, comportant une chambre fluidique de sortie d'air (26.2), destinée à communiquer à un collecteur de sortie d'air (13.2) de l'empilement (10), séparée de la chambre centrale (30) par une paroi transversale (23) comportant un orifice d'injection d'air (32) débouchant dans la chambre centrale (30).

10. Pile à combustible (1), destinée à fonctionner en mode ouvert avec recirculation d'hydrogène, comportant :
o au moins un empilement (10) de cellules électrochimiques comprenant des collecteurs d'entrée (12.1, 13.1, 14.1) et des collecteurs de sortie (12.2, 13.2, 14.2), lesquels débouchent sur une même face de connexion fluidique de l'empilement (10) et sont adaptés à assurer l'écoulement de fluides dans l'empilement (10), dont un collecteur d'entrée d'hydrogène (12.1) et un collecteur de sortie d'hydrogène (12.2), et
o au moins une ligne fluidique d'alimentation en hydrogène (2) destinée à être reliée au collecteur d'entrée d'hydrogène (12.1), et
o une culasse (20) de distribution fluidique selon l'une quelconque des revendications précédentes, assemblée de manière étanche à l'empilement (10) de sorte que les chambres fluidiques (24, 26, 28) communiquent avec les collecteurs d'entrée et de sortie (12, 13, 14).

11. Pile à combustible (1) selon la revendication 10, comportant deux empilements (10a, 10b) de cellules électrochimiques différents, et une culasse (20) de distribution fluidique disposée entre les deux empilements (10a, 10b), et assemblée de manière étanche auxdits empilements (10a, 10b) de sorte que les chambres fluidiques (24, 26, 28) communiquent avec les collecteurs d'entrée et de sortie desdits empilements.

## Patentansprüche

1. Zylinderkopf (20) zur Fluidverteilung einer Brennstoffzelle, wobei die Brennstoffzelle (1) dazu bestimmt ist, im offenen Modus mit Wasserstoffrückführung zu funktionieren und Folgendes aufweist:
• mindestens einen Stapel (10) aus elektrochemischen Zellen, der Eintrittskollektoren (12.1, 13.1, 14.1) und Austrittskollektoren (12.2, 13.2, 14.2) umfasst, die auf einer selben Fluidverbindungsfläche des Stapels (10) münden und geeignet sind, die Strömung von Fluiden im Stapel (10) sicherzustellen, davon einen Wasserstoff-Eintrittskollektor (12.1) und einen Wasserstoff-Austrittskollektor (12.2), und
• mindestens eine Wasserstoffversorgungs-Fluidleitung (2), die dazu bestimmt ist, mit dem Wasserstoff-Eintrittskollektor (12.1) verbunden zu sein,
o wobei der Zylinderkopf (20) Folgendes aufweist:
• Fluidkammern (24, 26, 28), davon eine Wasserstoff-Eintrittsfluidkammer (24.1) und eine Wasserstoff-Austrittsfluidkammer (24.2), die dazu bestimmt sind, mit den Eintritts- und Austrittskollektoren (12, 13, 14) in Verbindung zu stehen, und gegenüber der äußeren Umgebung des Zylinderkopfs (20) hermetisch sind, wenn dieser an den Stapel (10) angebaut ist, und in Querrichtung in einer Hauptebene des Zylinderkopfs (20) durch mindestens eine Querwand (23) begrenzt sind;
o wobei der Zylinderkopf (20) **dadurch gekennzeichnet ist, dass** er ferner Folgendes aufweist:
• eine Mittelkammer (30), die in der Hauptebene von Fluidkammern (24, 26, 28) umgeben ist und mindestens zwei Lüftungsöffnungen (31) aufweist, die eine Fluidverbindung in der Hauptebene zwischen der Mittelkammer (30) und der äußeren Umgebung des Zylinderkopfs (20) erlauben;
• einen Auswerfer (3), der sich in der Mittelkammer (30) befindet, der an die Wasserstoff-Eintrittsfluidkammer (24.1) angeschlossen ist und dazu bestimmt ist, an die Wasserstoffversorgungs-Fluidleitung (2) angeschlossen zu sein;
• eine Wasserstoffrückführungs-Fluidleitung (4), die sich in der Mittelkammer (30) befindet, die an die Wasserstoff-Austrittsfluidkammer (24.2) und an den Auswerfer (3) angeschlossen ist.

2. Zylinderkopf (20) zur Fluidverteilung nach Anspruch 1, wobei die zwei Lüftungsöffnungen (31) gemäß einer Hauptachse einander gegenüber angeordnet sind, die orthogonal zur Hauptebene des Zylinderkopfs (20) verläuft, um welche die Fluidkammern (24, 26, 28) angeordnet sind.

3. Zylinderkopf (20) zur Fluidverteilung nach Anspruch 1 oder 2, wobei die Wasserstoff-Eintrittsfluidkammer (24.1) und die Wasserstoff-Austrittsfluidkammer (24.2) jeweils einen Wasserstoff-Eintrittsanschluss (25.1) und einen Wasserstoff-Austrittsanschluss (25.2) aufweisen, die sich in der Mittelkammer (30) befinden und in der Hauptebene des Zylinderkopfs (20) orientiert sind.

4. Zylinderkopf (20) zur Fluidverteilung nach einem der Ansprüche 1 bis 3, wobei sich die Wasserstoffversorgungs-Fluidleitung (2) in der Mittelkammer (30) durch eine der Lüftungsöffnungen (31) hindurch erstreckt.

5. Zylinderkopf (20) zur Fluidverteilung nach einem der Ansprüche 1 bis 4, aufweisend Sauerstoff-Fluidkammern (26.1, 26.2) und Fluidkammern für Wärmeübertragungsfluid (28.1, 28.2), die jeweils einen Eintritts- (27.1, 29.1) und Austrittsanschluss (27.2, 29.2) aufweisen, die an eine Seite der entsprechenden Fluidkammern (26.1, 26.2, 28.1, 28.2) gegenüber der Mittelkammer (30) angeschlossen sind.

6. Zylinderkopf (20) zur Fluidverteilung nach einem der Ansprüche 1 bis 5, aufweisend zwei gegenüberliegende starre Platten, zwischen denen sich wenigstens die Querwand (23) erstreckt, wobei sich die Lüftungsöffnungen (31) über den gesamten Abstand erstreckt, der die starren Platten trennt.

7. Zylinderkopf (20) zur Fluidverteilung nach einem der Ansprüche 1 bis 6, aufweisend mindestens zwei gesonderte Querwände (23.1, 23.2), die die Fluidkammern (24, 26, 28) in Querrichtung begrenzen.

8. Zylinderkopf (20) zur Fluidverteilung nach einem der Ansprüche 1 bis 7, aufweisend mindestens zwei gesonderte Querwände (23.1, 23.2), die die Fluidkammern (24, 26, 28) in Querrichtung begrenzen, wobei die Querwände (23.1, 23.2) lokal voneinander beabstandet sind, um die Lüftungsöffnungen (31) zu bilden, wobei somit eine natürliche Konvektion der Luft zwischen der Mittelkammer (30) und der äußeren Umgebung des Zylinderkopfs (20) erlaubt wird.

9. Zylinderkopf (20) zur Fluidverteilung nach einem der Ansprüche 1 bis 8, aufweisend eine Luftaustritts-Fluidkammer (26.2), die dazu bestimmt ist, mit einem Luftaustrittskollektor (13.2) des Stapels (10) verbunden zu sein, die von der Mittelkammer (30) durch eine Querwand (23) getrennt ist, die eine Lufteinspritzöffnung (32) aufweist, die in der Mittelkammer (30) mündet.

10. Brennstoffzelle (1), die dazu bestimmt ist, im offenen Modus mit Wasserstoffrückführung zu funktionieren, aufweisend:
o mindestens einen Stapel (10) aus elektrochemischen Zellen, der Eintrittskollektoren (12.1, 13.1, 14.1) und Austrittskollektoren (12.2, 13.2, 14.2) umfasst, die auf einer selben Fluidverbindungsfläche des Stapels (10) münden und geeignet sind, die Strömung von Fluiden im Stapel (10) sicherzustellen, davon einen Wasserstoff-Eintrittskollektor (12.1) und einen Wasserstoff-Austrittskollektor (12.2), und
o mindestens eine Wasserstoffversorgungs-Fluidleitung (2), die dazu bestimmt ist, mit dem Wasserstoff-Eintrittskollektor (12.1) verbunden zu sein, und
o einen Zylinderkopf (20) zur Fluidverteilung nach einem der vorhergehenden Ansprüche, der dicht an den Stapel (10) angebaut ist, so dass die Fluidkammern (24, 26, 28) mit den Eintritts- und Austrittskollektoren (12, 13, 14) in Verbindung stehen.

11. Brennstoffzelle (1) nach Anspruch 10, aufweisend zwei verschiedene Stapel (10a, 10b) von elektrochemischen Zellen und einen Zylinderkopf (20) zur Fluidverteilung, der zwischen den zwei Stapeln (10a, 10b) angeordnet ist und dicht an die Stapel (10a, 10b) angebaut ist, so dass die Fluidkammern (24, 26, 28) mit den Eintritts- und Austrittskollektoren der Stapel in Verbindung stehen.

## Claims

1. Fluid delivery head (20) for a fuel cell, the fuel cell (1) being intended to function in open mode with recirculation of hydrogen and having:
• at least one stack (10) of electrochemical cells, comprising inlet manifolds (12.1, 13.1, 14.1) and outlet manifolds (12.2, 13.2, 14.2), which open onto one and the same fluidic connection face of the stack (10) and are designed to ensure the flow of fluids in the stack (10), including a hydrogen inlet manifold (12.1) and a hydrogen outlet manifold (12.2), and
• at least one fluidic hydrogen supply line (2) intended to be connected to the hydrogen inlet manifold (12.1),
o the head (20) having:
• fluidic chambers (24, 26, 28), including a fluidic hydrogen inlet chamber (24.1) and a fluidic hydrogen outlet chamber (24.2), which are intended to communicate with the inlet and outlet manifolds (12, 13, 14), and being airtight with respect to the exterior environment of the head (20) when the latter is mounted on the stack (10), and being delimited transversely, in a main plane of the head (20), by at least one transverse wall (23);
o the head (20) being **characterized in that** it also has:
• a central chamber (30), which is surrounded, in the main plane, by the fluidic chambers (24, 26, 28) and has at least two ventilation openings (31) allowing fluidic communication, in the main plane, between the central chamber (30) and the exterior environment of the head (20);
• an ejector (3), which is situated in the central chamber (30), is connected to the fluidic hydrogen inlet chamber (24.1) and is intended to be connected to the fluidic hydrogen supply line (2);
• a fluidic hydrogen recirculation line (4), which is situated in the central chamber (30) and is connected to the fluidic hydrogen outlet chamber (24.2) and to the ejector (3).

2. Fluid delivery head (20) according to Claim 1, wherein the two ventilation openings (31) are disposed opposite one another along a main axis orthogonal to the main plane of the head (20), around which the fluidic chambers (24, 26, 28) are arranged.

3. Fluid delivery head (20) according to Claim 1 or 2, wherein the fluidic hydrogen inlet chamber (24.1) and the fluidic hydrogen outlet chamber (24.2) have, respectively, a hydrogen inlet port (25.1) and a hydrogen outlet port (25.2), which are situated in the central chamber (30) and oriented in the main plane of the head (20).

4. Fluid delivery head (20) according to any one of Claims 1 to 3, wherein the fluidic hydrogen supply line (2) extends into the central chamber (30), passing through one of the ventilation openings (31).

5. Fluid delivery head (20) according to any one of Claims 1 to 4, having fluidic oxygen chambers (26.1, 26.2) and fluidic heat-transfer fluid chambers (28.1, 28.2), each having an inlet port (27.1, 29.1) and an outlet port (27.2, 29.2), which are connected to an opposite side of the corresponding fluidic chambers (26.1, 26.2, 28.1, 28.2) from the central chamber (30).

6. Fluid delivery head (20) according to any one of Claims 1 to 5, having two opposite rigid plates between which at least the transverse wall (23) extends, the ventilation openings (31) extending over the entire distance between said rigid plates.

7. Fluid delivery head (20) according to any one of Claims 1 to 6, having at least two separate transverse walls (23.1, 23.2) that transversely delimit said fluidic chambers (24, 26, 28).

8. Fluid delivery head (20) according to any one of Claims 1 to 7, having at least two separate transverse walls (23.1, 23.2) that transversely delimit said fluidic chambers (24, 26, 28), the transverse walls (23.1, 23.2) being locally at a distance from one another so as to form said ventilation openings (31), thus allowing natural convection of the air between the central chamber (30) and the exterior environment of the head (20).

9. Fluid delivery head (20) according to any one of Claims 1 to 8, having a fluidic air outlet chamber (26.2), which is intended to communicate with an air outlet manifold (13.2) of the stack (10) and is separated from the central chamber (30) by a transverse wall (23) having an air injection orifice (32) opening into the central chamber (30).

10. Fuel cell (1), intended to function in open mode with recirculation of hydrogen, having:
o at least one stack (10) of electrochemical cells comprising inlet manifolds (12.1, 13.1, 14.1) and outlet manifolds (12.2, 13.2, 14.2), which open onto one and the same fluidic connection face of the stack (10) and are designed to ensure the flow of fluids in the stack (10), including a hydrogen inlet manifold (12.1) and a hydrogen outlet manifold (12.2), and
o at least one fluidic hydrogen supply line (2) intended to be connected to the hydrogen inlet manifold (12.1), and
o a fluid delivery head (20) according to any one of the preceding claims, which is mounted in a sealed manner on the stack (10) such that the fluidic chambers (24, 26, 28) communicate with the inlet and outlet manifolds (12, 13, 14).

11. Fuel cell (1) according to Claim 10, having two different stacks (10a, 10b) of electrochemical cells, and a fluid delivery head (20) which is disposed between the two stacks (10a, 10b) and mounted in a sealed manner on said stacks (10a, 10b) such that the fluidic chambers (24, 26, 28) communicate with the inlet and outlet manifolds of said stacks.
